# EUROPÄISCHE PATENTANMELDUNG

(11) **EP 1 027 968 A2**
(43) Veröffentlichungstag der Anmeldung: **16.08.2000**
(21) Anmeldenummer: 00101606.2
(22) Anmeldetag: 27.01.2000
(51) Int. Cl.: B27K 5/02, C09B 67/26

(54) **Verwendung flüssiger Farbstoffpräparationen zum Färben von Holz**

(30) Priorität: 09.02.1999 DE 19905279
(71) Anmelder: BAYER AG, 51368 Leverkusen (DE)
(72) Erfinder: Mennicke, Winfried, Dr., 51375 Leverkusen (DE); Richter, Rolf, Dr., 51573 Leverkusen (DE)

(57) **Zusammenfassung**

Verwendung von flüssigen Farbstoffpräparationen zum Färben von Holz, wobei die flüssige Farbstoffpräparation
- 5 bis 30 Gew.-%, insbesondere 12 bis 23 Gew.-%, eines Farbstoffes der Formel (I) 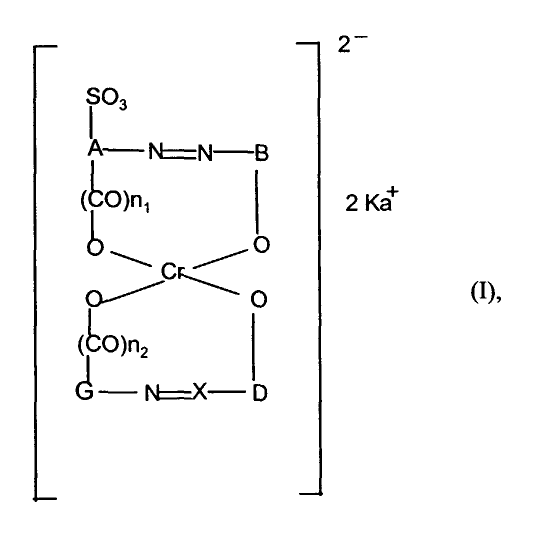 worin
   n₁ und n₂ die Zahl 1 oder 0 bedeuten,
   - X: für N oder CH steht,
   - Ka⁺: für ein Kation steht
   und die polyvalenten Reste A, B, G und D unabhängig voneinander heterocyclische oder aromatische Reste, insbesondere gegebenenfalls substituierte Phenylen- und Naphthylenreste darstellen, worin die jeweils komplexbildende -COO- oder -O-Gruppe in ortho-Stellung zur Azo- bzw. zur Azomethingruppe (X=CH) stehen,
- 20 bis 90 Gew.-%, insbesondere 15 bis 60 Gew.-% eines Alkoxyalkohols der Formel (II)

   R-O-(-Z-O-)ₙ₃-H (II)

   worin
   - R: ein geradkettiges oder verzweigtes C₁-C₄-Alkyl,
   - Z: ein geradkettiges oder verzweigtes C₂-C₃-Alkylen und
   - n₃: für 1, 2 oder 3 steht,
- 5 bis 75 Gew.-% Wasser enthält.

## Beschreibung

Die Erfindung betrifft die Verwendung flüssiger Farbstoffpräparationen zum Färben von Holz.

Flüssige Farbstoffpräparationen zum Färben von Holz werden gemeinhin als Holzbeizen bezeichnet. Holzbeizen sollen die Maserung des Holzes und seiner Furniere nicht verdecken, sondern unter Farbgebung betonen, und enthalten daher nur echt gelöste Farbstoffe. In der Praxis bekannt sind die Lösungen von basischen oder sauren Farbstoffen in Wasser oder von Solvent-Farbstoffen in organischen Lösungsmitteln. Neben diesen sogenannten Wasser- und Lösungsmittelbeizen hat sich Ausgang der 80-er Jahre als weiterer Typ eine Kombination dieser beiden Beizen etabliert. Es handelt sich um mit Wasser verdünnbare Lösungen von organischen Farbstoffen in Gemischen aus Wasser und Lösungsmittel.

Holzbeizen werden überwiegend im Innenbereich eingesetzt und dienen hauptsächlich dekorativen Zwecken. Sie sollen beim Auftragen mit einem Schwamm, Pinsel oder einer Spritzpistole möglichst gleichmäßig und möglichst tief in das Holzmaterial eindringen und nach dem Abtrocknen eine gleichmäßige licht-. wasser- und schleifechte Färbung ergeben. Die gebeizten Hölzer sollen ferner noch mit klaren Möbellacken geschützt und geschönt werden können, ohne daß die Farbstoffe in den Klarlack ausbluten.

Die Hotzbeizen enthalten überwiegend Metallkomplexfarbstoffe.

Es wurde gefunden, daß mit nachfolgend beschriebenen flüssigen Farbstoffpräparationen mit Wasser verdünnbare Holzbeizen zur Verfügung gestellt werden, die die Erfordernisse der Praxis hervorragend erfüllen.

Die Erfindung betrifft die Verwendung flüssiger Farbstoffpräparationen zum Färben von Holz, dadurch gekennzeichnet, daß die flüssige Farbstoffpräparationen, enthaltend
- 5 bis 30 Gew.-%, insbesondere 12 bis 23 Gew.-%, eines Farbstoffes der Formel I 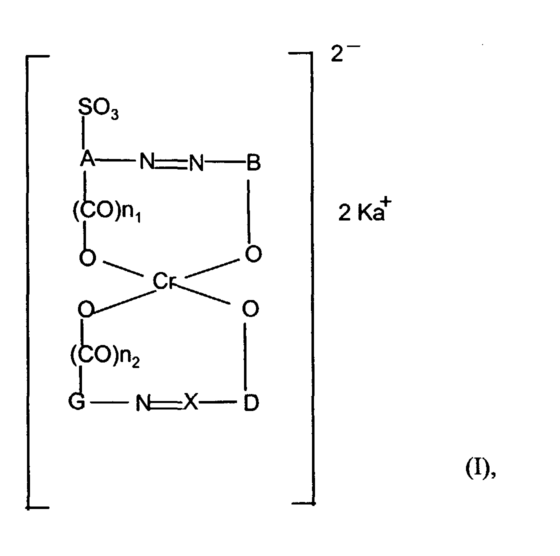 worin n₁ und n₂ die Zahl 1 oder 0 bedeuten,
   - X: für N oder CH steht, Ka⁺ für ein Kation steht,
   und die polyvalenten Reste A, B, G und D unabhängig voneinander heterocyclische oder aromatische Reste, insbesondere gegebenenfalls substituierte Phenylen- und Naphthylenreste darstellen, wobei die jeweils komplexbildende -COO- oder -O-Gruppe in ortho-Stellung zur Azo- bzw. zur Azomethingruppe (X=CH) stehen,
- 15 bis 90 Gew.-%, insbesondere 15 bis 60 Gew.-%, vorzugsweise 20 bis 90 Gew.-%, besonders bevorzugt 25 bis 60 Gew.-% eines Alkoxyalkohols der Formel (II)

   R-O-(-Z-O-)ₙ₃-H, (II),

   worin
   - R: ein geradkettiges oder verzweigtes C₁-C₄-Alkyl,
   - Z: ein geradkettiges oder verzweigtes C₂-C₃-Alkylen bedeutet und
   - n₃: für 1, 2 oder 3, insbesondere für 2 oder 3 steht, und
- 5 bis 75 Gew.-% Wasser eingesetzt werden.

Im allgemeinen versteht man unter "flüssig" einen bei Raumtemperatur und Normaldruck flüssigen Zustand.

In einer besonderen Ausführungsform des erfindungsgemäßen Verfahrens werden Farbstoffpräparationen eingesetzt, die Farbstoffe der Formel (I) enthalten, die vorzugsweise aus Azo- bzw. Azomethin-Verbindungen aufgebaut sind; die in Form ihrer freien Säure der Verbindungen (III) und (IV) entsprechen. 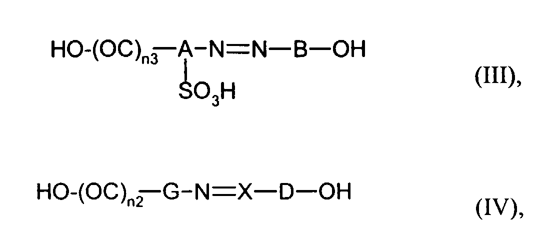 worin a, B, G, D, n₁ und n₂ die oben angegebenen Bedeutungen besitzen.

Bevorzugte Farbstoffe der Formel (I) leiten sich von folgenden Resten ab:
Als Reste der Formel 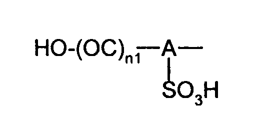 kommen vorzugsweise in Frage: 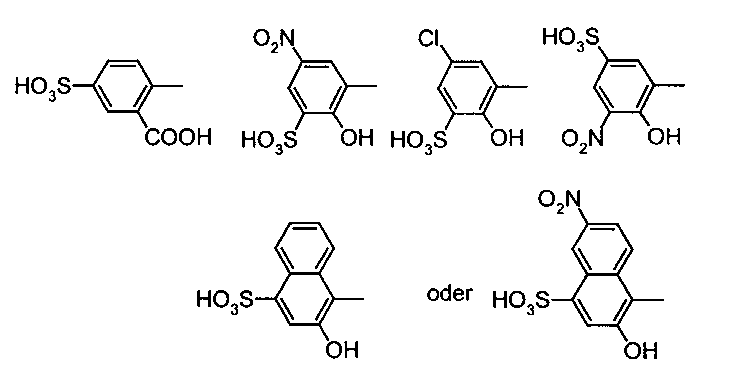
Als Reste der Formel -B-OH kommen vorzugsweise in Frage: 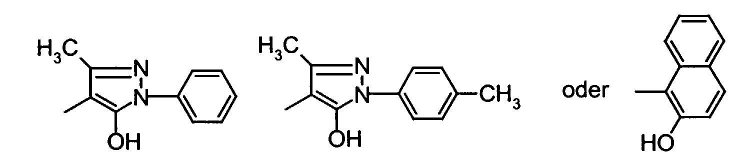
Als Reste der Formel -G-(CO)n₂OH kommen vorzugsweise in Frage: 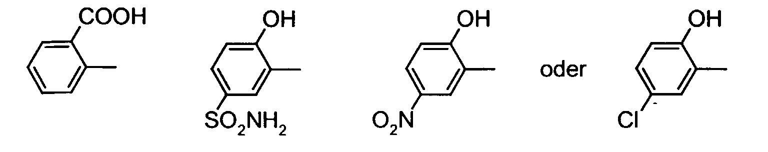
Als Reste der Formel -D-OH kommen vorzugsweise in Frage: 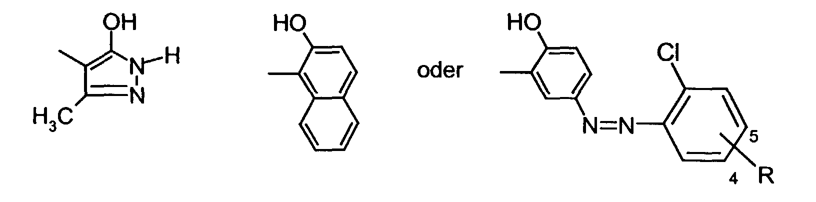
Als weiterhin bevorzugte Farbstoffe der Formel (I) werden solche der Formel (V) eingesetzt: 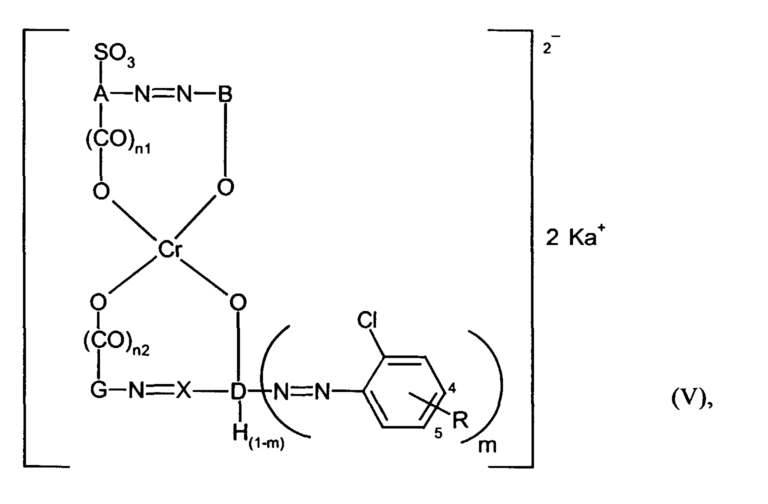 worin
   A, B, G, D, n₁, n₂ und Ka⁺ die oben angegebenen Bedeutungen besitzen
   und
   - m: für 0 oder 1 steht und
   - R: Für 4-Nitro oder 5-Chlor steht und im Falle von m=1 die o-Chlorphenylazogruppe in para-Stellung zur komplexbildenden -O-Gruppe steht.

Bevorzugte Substituenten der polyvalenten Reste A, B, G und D sind beispielsweise solche, ausgewählt aus der Gruppe: NO₂, Halogen, insbesondere Chlor, Sulfonamid und C₁-C₄-Alkyl.

Die erfindungsgemäß verwendbaren Farbstoffe der Formel (I) sind größtenteils bekannt und können nach bekannten Methoden, wie sie beispielsweise in EP 0 066 230, EP 0 072 501 oder EP 0 532 994 beschrieben sind, hergestellt werden.

Das durch Ka⁺ dargestellte Kation ist vorzugsweise ein Alkalikation, insbesondere ein Lithium-, Natrium- oder Kaliumkation, ein Ammoniumion, das Kation eines organischen Amins, wie beispielsweise das von Mono-, Di-, Triethylamin, Mono-, Di-, Triethanolamin, N-Methyldiethanolamin, N-Butyldiethanolamin, N,N-Diethylethanolamin, oder ein Tetraalkylammonium, wie beispielsweise Tetramethylammonium. Ein besonders bevorzugtes Kation ist das Lithiumkation.

Bevorzugte Farbstoffe der Formel I entsprechen einem Farbstoff der Formel (Ia) (gelb) 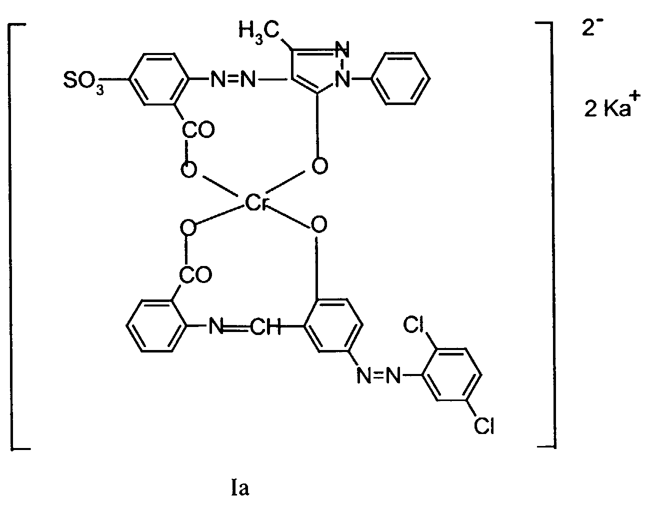 einem Farbstoff der Formel Ib (orange) 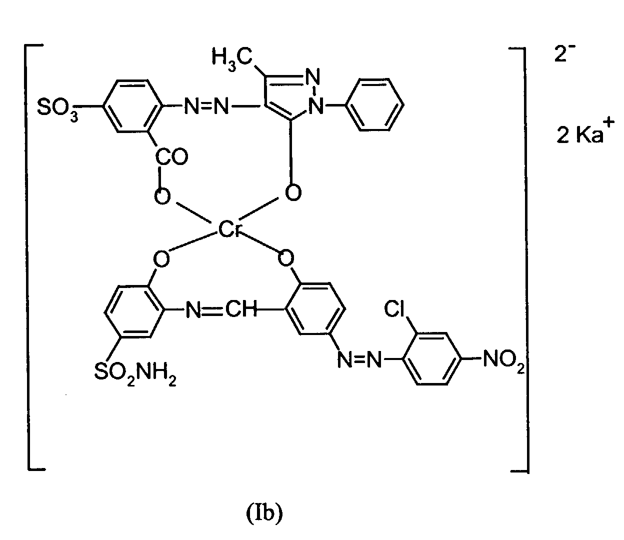 einem Farbstoff der Formel (Ic) (rot) 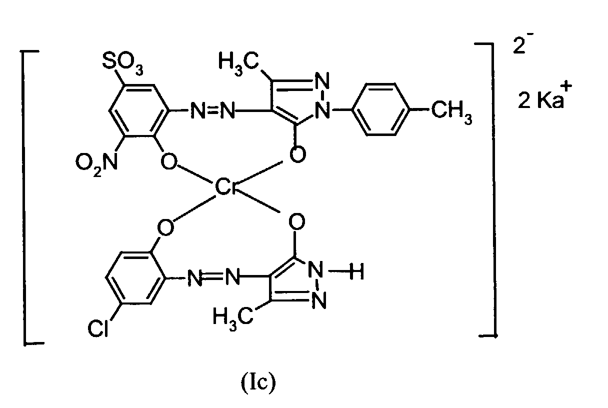 einem Farbstoff der Formel (Id) oder (Ie) (jeweils braun) 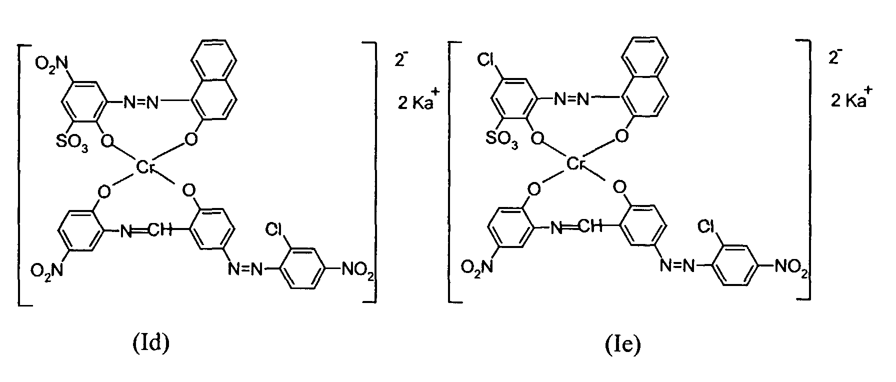 einem Farbstoff der Formel (If) (blau) 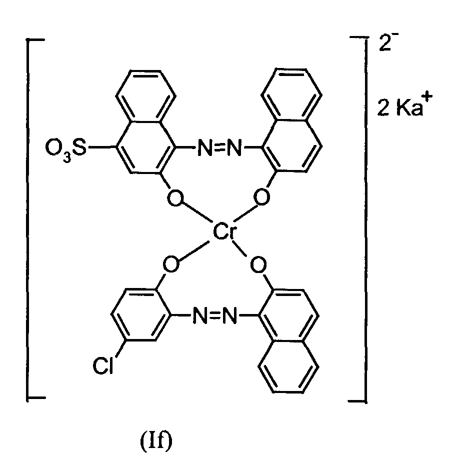 und/oder der schwarze Farbstoff der Formel (Ig)

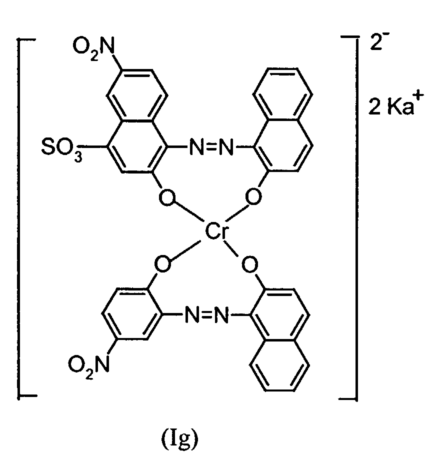

Besonders bevorzugt sind die Farbstoffe der Formeln (Ia) bis (Ig) worin Ka⁺=Li⁺ bedeutet.

Als bevorzugte Alkoxyalkohole der Formel (II) werden beispielsweise die folgenden Vertreter genannt: C₁-C₄-Monoalkylether von Mono- und Polyglykolen, wie Methylglykol, Ethylglykol, Propylglykol, Butylglykol, Methyldiethylenglykol, Butyldiethylenglykol, Methyltriethylenglykol, 1-Methoxy-2-propanol, 2-Methoxy-1-propanol, 1-Ethoxy-2-propanol, 2-Ethoxy-1-propanol, Dipropylenglykolmonomethylether, 3-(3-Methoxy-1-propoxy)-1-propanol, Dipropylenglykolmonoethylether, 3-(3-Ethoxy-1-propoxy)-1-propanol.

Besonders geeignete Alkoxyalkohole der Formel (II) sind die C₁-C₄-Monoalkylether von Glykolen und Diglykolen, die Monoalkylether des 1,2-Propylenglykols sowie des Ethylenglykols, insbesondere Monoalkylether des 1,2-Propylenglykols. Ganz besonders bevorzugt ist 1-Ethoxy-2-propanol.

Die erfindungsgemäß verwendeten Farbstoffpräparationen können weiterhin
- 0 bis 40 Gew.-%,: insbesondere 20 bis 35 Gew.-% eines cyclischen Ester oder Amids sowie
- 0 bis 5 Gew.-%: von in Holzbeizen üblichen Hilfsmittel wie Fungizide, UV-Stabilisatoren, Bindemittel und/oder Tenside enthalten.

Als bevorzugte cyclische Ester bzw. Amide kommen beispielsweise Lactone, wie 4-Butyrolacton, und Lactame, wie Pyrrolidon, N-Methylpyrrolidon, ε-Caprolactam, N-Methyl-ε-caprolactam und N-Ethyl-ε-caprolactam in Frage.

Desweiteren können weitere in Holzbeizen übliche mit Wasser mischbare organische Lösungsmittel verwendet werden. Insbesondere sind dabei zu nennen: niedere Alkohole, wie Ethanol, Ketone, wie Methylethylketon, Mono- und Polyglykole, wie Ethylenglykol, Diethylenglykol, Triethylenglykol, 1,2-Propylenglykol, Dipropylenglykol sowie Carbonamide wie Formamid, Dimethylformamid sowie cyclische Harnstoffe wie 1,3-Dimethyl-2-imidazolidinon.

Die Farbstoffe der Formel (I) sind gut wasserlöslich. Konzentration und Stabilität der wäßrigen Lösungen können beispielsweise durch Zusatz von einem mit Wasser mischbaren organischen Lösungsmittel noch erheblich gesteigert werden.

Es wurde gefunden, daß konzentrierte wäßrige Lösungen dieser Farbstoffe der Formel (I), insbesondere die der Formel (II) bis (VIII), vorzugsweise in einem Gemisch aus Wasser und wenigstens einem mit Wasser mischbaren organischen Lösungsmittel wertvolle Holzbeizen darstellen, mit denen sich nach den verschiedenen Anwendungsmethoden wetter- und lichtechte Holzfärbungen erzielen lassen.

Als Färbematerialien kommen geformtes Holz in unterschiedlichster Gestalt, auch in feinverteilter Form, wie Holz- und Sägespäne, vor allem aber Holzfurniere in Frage. Die Furniere sind in der Regel großflächige Holzbretter aus verschiedenen Hölzern in einer Dicke von im allgemeinen 0,5 bis 10 mm. Als Holzsorten kommen Kiefer, Fichte, Tanne, Lärche, Föhre, Eiche, Buche, Esche, Ahorn, Nußbaum, Birnbaum, Teakholz, Mahagoni, Kastanie, Birke, Haselnuß, Linde, Weide, Pappel oder Platane in Betracht.

Je nach Beschaffenheit und Sorte des Holzes und je nach Färbebedingungen können die erfindungsgemäß verwendbaren Farbstoffe der Formel (I) sich an der Oberfläche oder mehr oder weniger tief im Innern des Holzmaterials befinden. Furniere werden üblicherweise möglichst durch den gesamten Querschnitt gefärbt.

Die erfindungsgemäße Verwendung erfolgt auf die übliche Weise, bevorzugt werden die Farbstoffpräparationen beispielsweise durch Streichen, Rollen, Sprühen oder Tränken auf das Holz appliziert. Beim Streichen, Rollen oder Sprühen kommen die Farbstoffpräparationen vorzugsweise in unverdünnter Form zur Anwendung, während beim Tränken oder Tauchfärben die Farbstoffpräparationen mit der bis zu 300-fachen Menge Wasser verdünnt werden können.

Eine tiefere Penetration des Farbstoffes in das Holzmaterial oder die Durchfärbung eines Holzfurniers wird in der Regel durch Tauchfärbungen in geschlossenem Behälter erzielt. Die Eindringtiefe wird durch die Behandlungsdauer, die Temperatur des Färbebades und den angelegten Druck auf den Behälter bestimmt. Die Behandlungsdauer kann bis zu 10 Stunden betragen, die Temperatur liegt in der Regel bei 20 bis 120°C und der Druck vorzugsweise bei 1 bis 2 bar liegen.

Die Farbstoffe der Formel (I) zeichnen sich durch eine gute Penetration aus und geben in der Regel schon nach 3 Stunden bei Temperaturen bis zu 100°C Holzfärbungen mit genügender Eindringtiefe bzw. vollständiger Penetration.

Bei der Tauchfärbung im geschlossenem Behälter sollte das Färbegut vorher befeuchtet sein, um Deformationen während des Färbeprozesses zu vermeiden. Um den Farbstoff besser im Holz zu fixieren, wird der pH des Färbebades auf 5 bis 4,5 abgesenkt. Nach der Behandlung wird das gefärbte Material im allgemeinen an der Luft getrocknet, entweder bei Raumtemperatur oder in einem Umlufttrockenschrank bei höheren Temperaturen, vorzugsweise bei 40 bis 80°C. Man erhält auf diese Weise mit den Farbstoffen der Formel (I) wetterbeständige und naßechte Färbungen mit guter Licht- und Überlackierechtheit.

### Beispiel 1

20 gut durchfeuchtete Holzfurniere aus Ahorn in den Maßen 2 m x 1 m x 1 mm werden mit Abstandshaltern aus Polyester versehen, in einen verschließbaren Container überführt und mit einer Färbeflotte aus 3,2 kg einer Flüssigpräparation des Farbstoffes der Formel Id und 400 l Wasser übergossen. Die Flüssigpräparation selbst setzt sich 13 Gew.-% Farbstoff, 40 Gew.-% 1-Ethoxy-2-propanol und Balance Wasser zusammen.

Das Färbebad wird zunächst auf 40°C erwärmt und der pH der Flotte mit ca. 1 l Essigsäure 1:1 auf 5,0 abgesenkt. Man erwärmt anschließend mit einer Geschwindigkeit von 1°C pro Minute auf 98°C, hält die Temperatur eine Stunde auf dieser Höhe und läßt dann auf 70°C abkühlen. Nach Spülen der Platten mit kaltem Wasser und Trocknen im Umluftschrank bei 80°C erhält man durchgefärbtes Furnier in einem licht- und wetterechten Braunton.

### Beispiel 2

Auf ähnliche Weise wie in Beispiel 1 werden handelsübliche Holzfurniere mit einem Gemisch aus 10 Teilen Flüssigpräparation des schwarzen Farbstoffes der Formel (Ig), 1 Teil Flüssigpräparation des orange Farbstoffes der Formel (Ib) und 0,5 Teil Flüssigpräparation des braunen Farbstoffes der Formel (Id) gefärbt, wobei die Präparation des Schwarzfarbstoffes neben 45 Gew.-% 1-Ethoxy-2-propanol noch 20 Gew.-% ε-Caprolactam enthält. Nach dem Waschen und Trocknen erhält man schwarze Furniere mit guter Licht- und Wetterechtecht.

### Beispiel 3

Anstelle des braunen Farbstoffes der Formel (Id) können auch der gelbe Farbstoff der Formel (Ia), der orange Farbstoff der Formel (Ib) und der rote Farbstoff der Formel (Ic) in Form von stabilen flüssigen Formulierungen oder Gemische dieser Flüssigmarken eingesetzt werden. Bei einem Flottenverhältnis von 1:25 (1 Gew. Teil Holz und 25 Gew.-Teile Flotte) und einer 1,5 %igen Farbstoffkonzentration (1,5 Gew.-Teile Reinfarbstoff und 100 Gew.-Teile Substrat) werden Buntfurniere im Gelb- bis Rotbereich erhalten.

### Beispiel 4

Verwendet man statt der in Beispiel 1 eingesetzten Flüssigpräparation des Farbstoffes der Formel Id eine solche
mit 40 Gew.-% Dipropylenglykolmonomethylether statt des 1-Ethoxy-2-propanols, so erhält man ebenfalls ein Furnier in einem licht- und wetterechten Braunton

### Beispiel 5

Verwendet man statt des in Beispiel 2 eingesetzten Gemisches von Flüssigpräparationen ein solches, bei dem die Präparation des Schwarzfarbstoffes 45 Gew.-% Dipropylenglykolmomnomethylether statt des 1-Ethoxy-2-propanols enthält, so erhält man ebenfalls schwarze Furniere mit guter Licht und Wetterechtheit.

## Patentansprüche

1. Verwendung von flüssigen Farbstoffpräparationen zum Färben von Holz, wobei die flüssigen Farbstoffpräparationen, enthaltend
- 5 bis 30 Gew.-%, insbesondere 12 bis 23 Gew.-%, eines Farbstoffes der Formel I 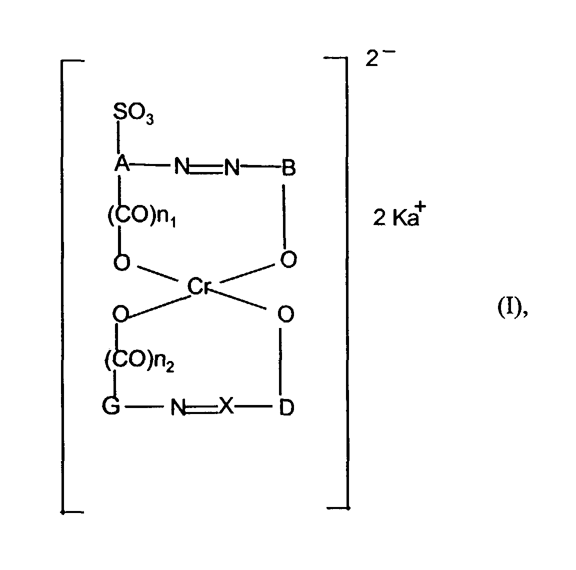 worin
n₁ und n₂ die Zahl 1 oder 0 bedeuten,
X für N oder CH steht,
Ka⁺ für ein Kation steht
und die polyvalenten Reste A, B, G und D unabhängig voneinander heterocyclische oder aromatische Reste, insbesondere gegebenenfalls substituierte Phenylen- und Naphthylenreste darstellen, wobei die jeweils komplexbildende -COO- oder -O-Gruppe in ortho-Stellung zur Azo- bzw. zur Azomethingruppe (X=CH) stehen,
- 15 bis 90 Gew.-%, insbesondere 15 bis 60 Gew.-% eines Alkoxyalkohols der Formel II
R-O-(-Z-O-)ₙ₃-H (II)
worin
R ein geradkettiges oder verzweigtes C₁-C₄-Alkyl,
Z ein geradkettiges oder verzweigtes C₂-C₃-Alkylen und
n₃ für 1, 2 oder 3 steht, und
- 5 bis 75 Gew.-% Wasser eingesetzt werden.

2. Verwendung gemäß Anspruch 1, dadurch gekennzeichnet, daß sich die Farbstoffe der Formel (I) von folgenden Resten ableiten:
Als Reste der Formel 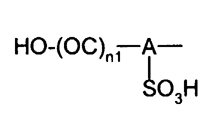 kommen in Frage: 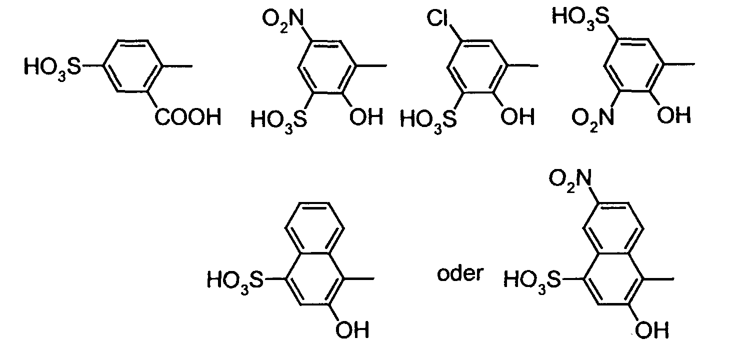
Als Reste der Formel -B-OH kommen vorzugsweise in Frage: 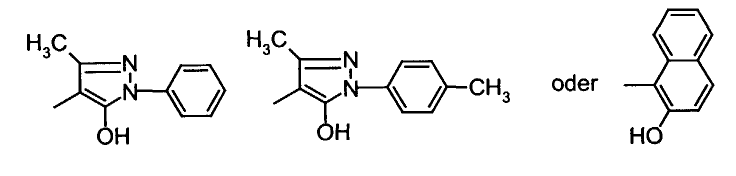
Als Reste der Formel -G-(CO)n₂OH kommen vorzugsweise in Frage: 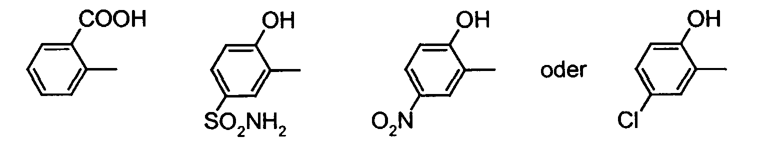
Als Reste der Formel -D-OH kommen vorzugsweise in Frage:

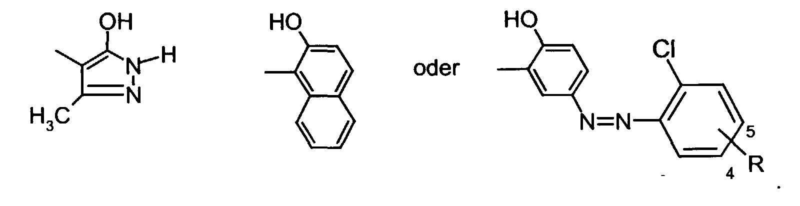

3. Verwendung gemäß Anspruch 1, dadurch gekennzeichnet, daß als Farbstoffe der Formel (I), solche der Formel (V) eingesetzt werden 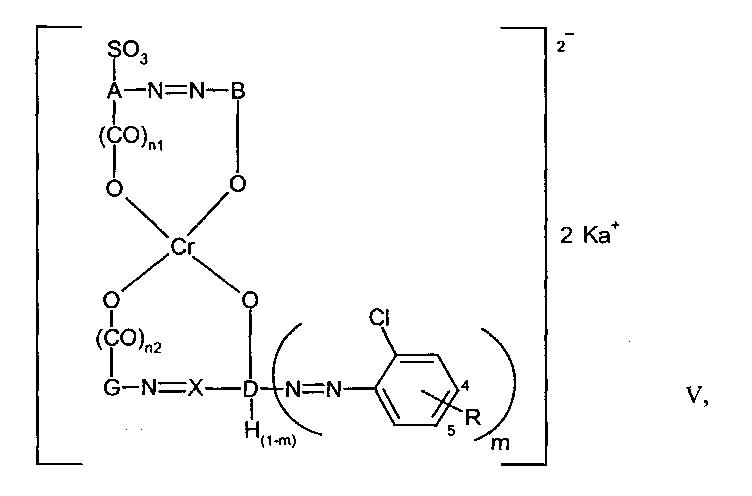 worin
A, B, G, D, n₁, n₂ und Ka⁺ die in Anspruch 1 angegebenen Bedeutungen besitzen
und
m für 0 oder 1 steht und
R für 4-Nitro oder 5-Chlor steht und im Falle von m=1 die o-Chlorphenylazogruppe in para-Stellung zur komplexbildenden -O-Gruppe steht.

4. Verwendung gemäß Anspruch 1, dadurch gekennzeichnet, daß als Farbstoffe der Formel (I) wenigstens ein Farbstoff der Formel (Ia) bis (Ig) eingesetzt wird 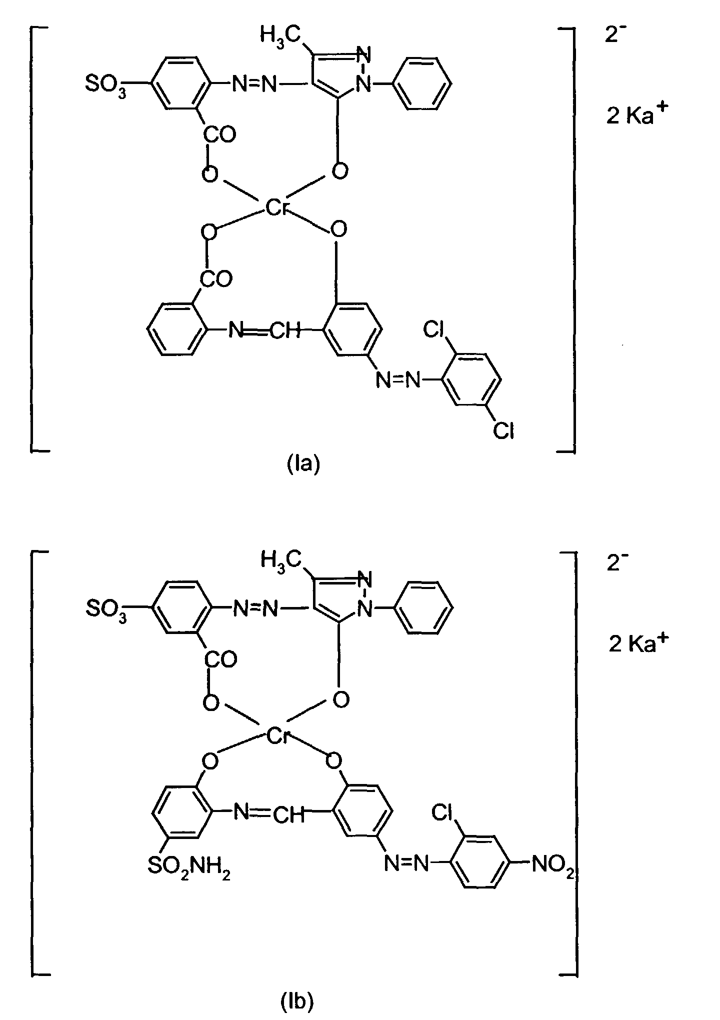 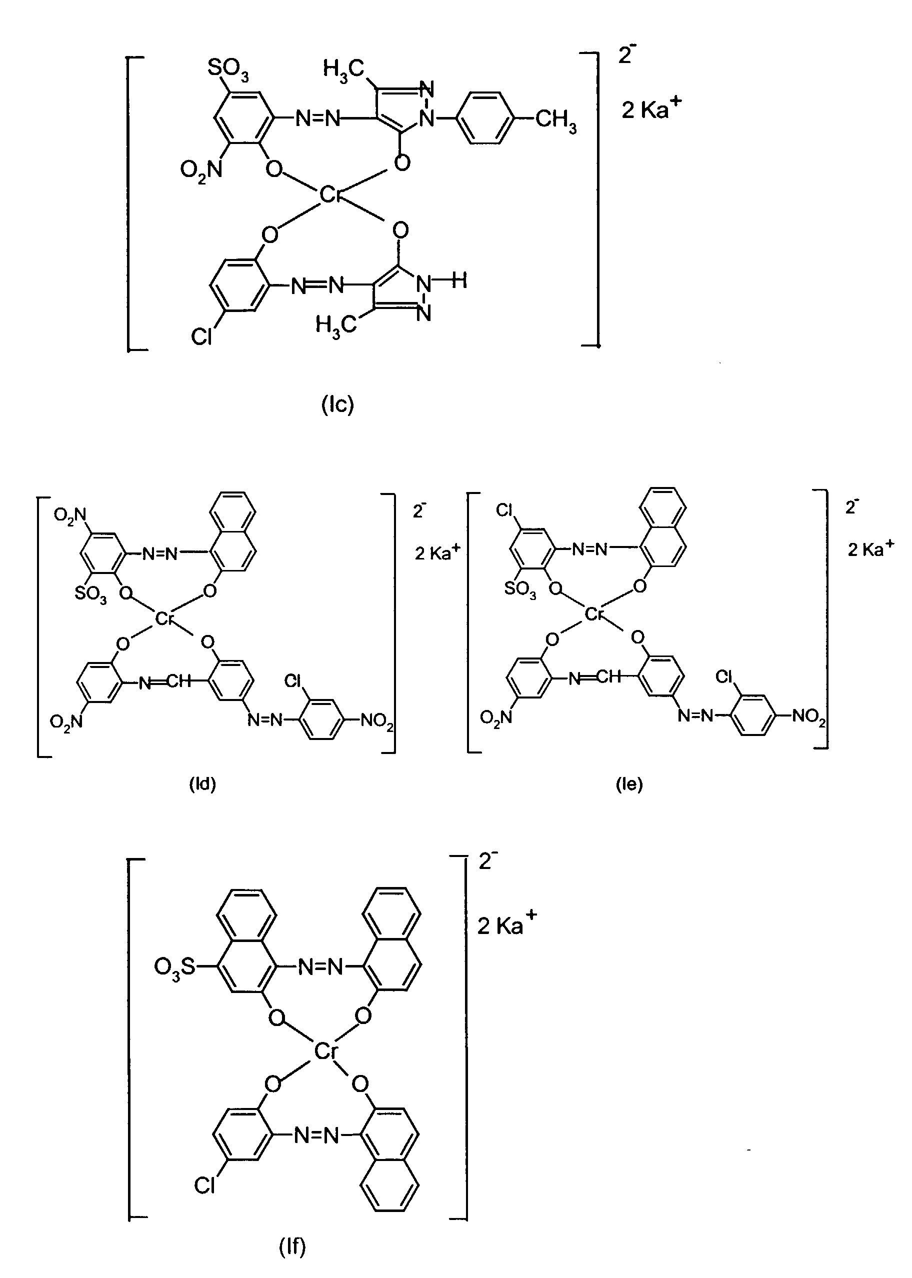 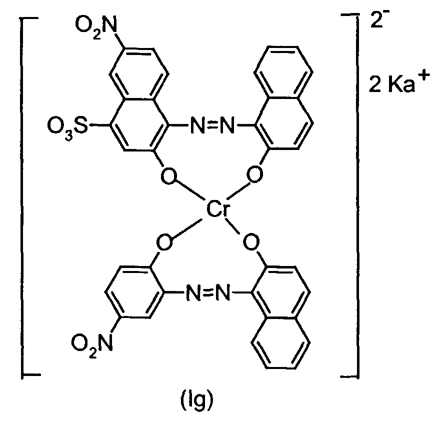 worin Ka⁺ ein Kation, insbesondere Li⁺ bedeutet.

5. Verwendung gemäß Anspruch 1, dadurch gekennzeichnet, daß als Alkoxyalkohol der Formel (II) wenigstens eine der nachstehenden Verbindungen eingesetzt wird: C₁-C₄-Monoalkylether von Mono- und Polyglykolen, wie Methylglykol, Ethylglykol, Propylglykol, Butylglykol, Methyldiethylenglykol, Butyldiethylenglykol, Methyltriethylenglykol, 1-Methoxy-2-propanol, 2-Methoxy-1-propanol, 1-Ethoxy-2-propanol, 2-Ethoxy-1-propanol, Dipropylenglykolmonomethylether, 3-(3-Methoxy-1-propoxy)-1-propanol, Dipropylenglykolmonoethylether oder 3-(3-Ethoxy-1-propoxy)-1-propanol.

6. Verwendung gemäß Anspruch 1, dadurch gekennzeichnet, daß die flüssige Farbstoffpräparation weiterhin
0 bis 40 Gew.-%, insbesondere 20 bis 35 Gew.-% eines cyclischen Ester oder Amids sowie
0 bis 5 Gew.-% von in Holzbeizen üblichen Hilfsmittel enthält.

7. Verwendung gemäß Anspruch 1, dadurch gekennzeichnet, dass man flüssige Farbstoffpräparationen, enthaltend 20 bis 90 Gew.-%, insbesondere 25 bis 60 Gew.-% eines Alkoxyalkohols der Formel (II), worin n₃ für 2 oder 3 steht, einsetzt.

8. Verwendung gemäß Anspruch 1, zum Färben von Holz, dadurch gekennzeichnet, daß als Holzarten die folgenden in Frage kommen: Kiefer, Fichte, Tanne, Lärche, Föhre, Eiche, Buche, Esche, Ahorn, Nußbaum, Birnbaum, Teakholz, Mahagoni, Kastanie, Birke, Haselnuß, Linde, Weide, Pappel oder Platane.

9. Verfahren zum Färben von Holz dadurch gekennzeichnet, daß die Farbstoffpräparationen gemäß Anspruch 1, gegebenenfalls nach bis zu 300-facher Verdünnung mit Wasser, durch Streichen, Rollen, Sprühen, Tränken oder Tauchen auf das Holz appliziert werden.
